# EUROPÄISCHE PATENTSCHRIFT

(11) **EP 0 815 017 B1**
(45) Veröffentlichungstag und Bekanntmachung des Hinweises auf die Patenterteilung: **10.02.1999**
(21) Anmeldenummer: 95941629.8
(22) Anmeldetag: 27.11.1995
(51) Int. Cl.: B65D 1/36

(54) **TRÄGER FÜR JOGHURTBECHER UND DERGLEICHEN**
CARRIER FOR YOGHURT POTS AND THE LIKE
SUPPORT POUR POTS DE YAOURT ET SIMILAIRE

(30) Priorität: 20.03.1995 DE 19510084
(43) Veröffentlichungstag der Anmeldung: 07.01.1998
(73) Patentinhaber: Fahrion, Otmar, 70806 Kornwestheim (DE)
(72) Erfinder: Fahrion, Otmar, 70806 Kornwestheim (DE)
(74) Vertreter: Ostertag, Reinhard
(86) Internationale Anmeldenummer: EP9504669
(87) Internationale Veröffentlichungsnummer: WO9629250

(56) Entgegenhaltungen:
- DE-A- 2 501 064
- DE-A- 4 332 623
- DE-U- 9 414 225

## Beschreibung

Die Erfindung betrifft einen Träger für Joghurtbecher und dergleichen gemäß dem Oberbegriff des Anspruches 1.

Ein derartiger Träger ist in DE-A-25 01 064 beschrieben. Gegenstand dieser Anmeldung ist ein Träger für konische Becher mit von der Plattenebene hochstehenden, miteinander verbundenen Umfangswänden, mit gefachartig angeordneten, einander schneidenden Zwischenwänden und mit ebenen Gefachböden innerhalb jedes Gefaches. Der Träger dient der geordneten Aufnahme konischer Becher und der Stapelung von Trägern. Hierzu sind Stapelansätze längs der Umfangswände des Trägers angeordnet. Ein derartiger Träger hat den Nachteil, daß das Gewicht des mit Joghurtbechern oder dergleichen bestückten Trägers beim Stapeln der Träger nur zum Teil durch die Stapelansätze aufgenommen wird. Ein weiterer Teil der Stapelkräfte wird über die Becher der derunterliegenden Träger selbst aufgenommen und/oder auf die darunterliegenden Träger übertragen. Eine unerwünschte Belastung der Verschlußfolien der Becher ist dabei nicht auszuschließen.

Weitere bekannte derartige Träger werden in unterschiedlicher Ausführungsform verwendet und bestehen in der Regel aus Pappezuschnitten, die durch Kleben oder Nadeln miteinander verbunden sind. Diese Träger werden nach einmaligem Gebrauch weggeworfen.

Es ist ferner bekannt, Milchprodukte wie Joghurt oder Quark in aus Kunststoff gespritzten Kästen zu vertreiben, die mit einer angeformten Inneneineinteilung versehen sind, ähnlich wie Flaschenkörbe. Derartige kistenförmige Träger haben den Vorteil, daß die beim Übereinanderstapeln einer größeren Anzahl von Trägern zu übertragenden Kräfte ausschließlich über die Träger weitergegeben werden, nicht aber über die in den Trägern befindlichen Produkte. Sie haben aber den Nachteil, daß sie teuer und sperrig sind.

Durch die vorliegende Erfindung soll ein Träger für Joghurtbecher und dergleichen angegeben werden, der ebenfalls preiswert ist und sich kompakt stapeln läßt, aber das Gewicht gestapelter Träger gut verteilt in die Bodenfläche leitet, so daß einerseits die Stapelkräfte von den in ihm enthaltenen Bechern ferngehalten werden, und andererseits der Träger aus dünnflächigem Material bestehen kann.

Diese Aufgabe ist erfindungsgemäß gelöst durch einen Träger mit den im Anspruch 1 angegebenen Merkmalen.

Bei dem erfindungsgemäßen Träger erfolgt das vertikale Übertragen von Kräften zwischen übereinander gestellten Trägern über die die einzelnen Becher umgebenden Umfangswände der Becheraufnahmen. Da man für jede Becheraufnahme des Trägers eine solche geschlossene Umfangswand hat, erfolgt die Kraftübertragung von einem Träger zum anderen über eine Vielzahl von Übertragungsstellen, so daß die einzelne Übertragungsstelle keine sehr hohe Kraft zu übernehmen braucht. Aus diesem Grunde kann man die kraftübertragenden Umfangswände der Becheraufnahmen aus verhältnismäßig schwachem Material herstellen, z.B. den gesamten Träger aus einer Folie, einem Blech oder einem Zuschnitt aus beschichtetem Karton durch Tiefziehen oder Vakuumverformung herstellen, wie im Anspruch 15 angegeben.

Dadurch, daß die Bodenwände der Becheraufnahmen jeweils durch den Aufnahmeöffnungen benachbarte Positioniermittel auf der Trägerplatte positioniert sind, ist ein Stapel aus erfindungsgemäßen Trägern auch in seitlicher Richtung stabil. Derartige Stapel lassen sich daher gut manuell und maschinell handhaben.

Vorteilhafte Weiterbildungen der Erfindung sind in Unteransprüchen angegeben.

Die Weiterbildung der Erfindung gemäß Anspruch 2 erleichtert das Entnehmen von Bechern aus einem Träger. Auch im Hinblick auf ein maschinelles Füllen von Trägern ist diese Weiterbildung von Vorteil.

Die Weiterbildungen der Erfindung gemäß den Ansprüchen 3 bis 5 sind im Hinblick auf ein einfaches Reinigen des Träger zur späteren Wiederverwendung von Vorteil.

Mit der Weiterbildung der Erfindung gemäß Anspruch 6 wird erreicht, daß zwischen leeren, direkt übereinander gestapelten Trägern ein Mindestabstand zwischen den Aufnahmewänden benachbarter Träger gewährleistet ist, was das Wiedertrennen des Stapels erleichtert.

Die Weiterbildung der Erfindung gemäß Anspruch 8 erlaubt das sichere Positionieren benachhbarter Träger in zur Trägerebene parallelen Richtungen.

Dabei wird mit der Weiterbildung der Erfindung gemäß Anspruch 8 erreicht, daß sich die Träger trotzdem sehr kompakt übereinander stapeln lassen, wenn sie leer sind.

Die Weiterbildungen der Erfindung gemäß den Ansprüchen 9 und 10 dienen wieder einer einfachen Reinigung des Trägers zur Wiederverwendung mit Wasser.

Die Weiterbildung der Erfindung gemäß Anspruch 11 ist im Hinblick auf eine hohe mechanische Festigkeit des Trägers von Vorteil.

Mit Trägern, die gemäß Anspruch 12 ausgebildet sind, kann man durch Verhaken einer Mehrzahl von einzelnen Trägern längs deren Ränder größere Trägerverbunde herstellen. Dies bedeutet, daß man auf einer Palette, auf der mehrere Trägerstapel nebeneinander sitzen, nicht unabhängige hohe Stapel hat, vielmehr kraftmäßig durchgehende breite Stapellagen. Dies ist im Hinblick auf eine sichere Bildung hoher Stapel von Vorteil.

Auch die Weiterbildung der Erfindung gemäß Anspruch 13 dient einer Erhöhung der mechanischen Festigkeit des Trägers unter Beibehaltung der Stapelfähigkeit leerer Träger.

Die Weiterbildungen der Erfindung gemäß den Ansprüchen 14 und 15 sind im Hinblick auf kostengünstige und einfache Herstellung ebenso von Vorteil wie im Hinblick auf ein einfaches Reinigen der Träger (glatte, dichte Oberflächen).

Die Weiterbildungen der Erfindung gemäß Anspruch 16 und 17 ermöglichen, daß ein Teil der Umfangswand von in die Träger eingesetzten Bechern von der Seite eines Becher enthaltenden Trägerstapels her sichtbar ist. Ferner können die zwischen den Positioniermitteln frei zugänglichen Abschnitte der Becher des im Stapel obersten Trägers besonders einfach ergriffen und entnommen werden.

Nachstehend wird die Erfindung anhand eines Ausführungsbeispieles unter Bezugnahme auf die Zeichnung näher erläutert. In dieser zeigen:
- Figur 1:: eine seitliche Ansicht eines Ausschnittes zweier Lagen eines mit Joghurtbechern gefüllten Trägerstapels;
- Figur 2:: eine Aufsicht auf einen leeren Träger, wie er zur Stapelbildung in Figur 1 verwendet wurde;
- Figur 3:: einen vergrößerten vertikalen Schnitt durch zwei übereinanderliegende Becheraufnahmen zweier benachbarter Träger des Stapels, geschnitten längs der Linie III-III von Figur 2;
- Figur 4:: einen vertikalen Schnitt durch benachbarte Becheraufnahmen eines Becherträgers, geschnitten längs der Linie IV-IV von Figur 2;
- Figur 5:: einen Schnitt durch einen Teil eines Stapels leerer Becherträger im Bereich einer randnahen Becheraufnahme;
- Figuren 6 bis 9:: Darstellungen, welche den Figuren 1 bis 3 und 5 entsprechen, in welchen aber ein abgewandelter Träger gezeigt ist; und
- Figur 10:: eine Aufsicht auf vier in einer Ebene angeordnete und mit einander verhakte Träger nach den Figuren 6 bis 9.

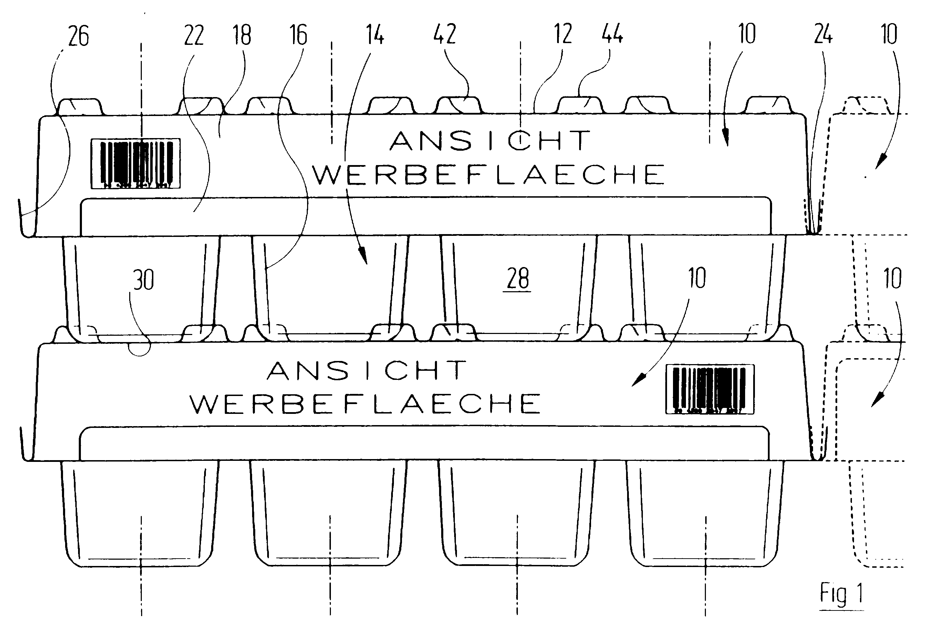

In Figur 1 sind mit 10 insgesamt Träger bezeichnet, die an einer oberen Trägerplatte 12 hängende insgesamt mit 14 bezeichnete Aufnahmen für Joghurtbecher 16 aufweisen. An die Ränder der Trägerplatte 12 ist eine umlaufende Versteifungswand 18 angeformt, welche sich etwa über die halbe Höhe der Becheraufnahmen 14 erstreckt. Die Versteifungswand 18 ist durchweg unter einem Winkel von etwa 5 bis 10° zur Normalen der Trägerplatte 12 (also in Figur zur Vertikalen) angestellt, hat damit etwa die Form eines Pyramidenstumpfes. An die eine Längskante der Versteifungswand 18 ist ein Falzabschnitt 20 angeformt, an die gegenüberliegene Längswand ein Rinnenabschnitt 22. Der Falzabschnitt 20 kann in der Praxis auch als Rinne ausgebildet sein, wobei diese dann aber etwas geringere Breite aufweist als der Rinnenabschnitt 22. An die eine Schmalseite der Versteifungswand 18 ist entsprechend ein Falzabschnitt 24, an die gegenüberliegende Seite ein Rinnenabschnitt 26 angeformt. Über die Falzabschnitte und Rinnenabschnitte können in einer Stapelebene benachbarte der Träger 10 miteinander verhakt werden. Auf diese Weise kann man auch eine große Anzahl von Trägern übereinanderstapeln, ohne daß die Gefahr besteht, daß bei Schrägstellung einer die Trägerstapel tragenden Palette oder bei ruckhafter Bewegung dieser Palette ein Trägerstapel umfällt.

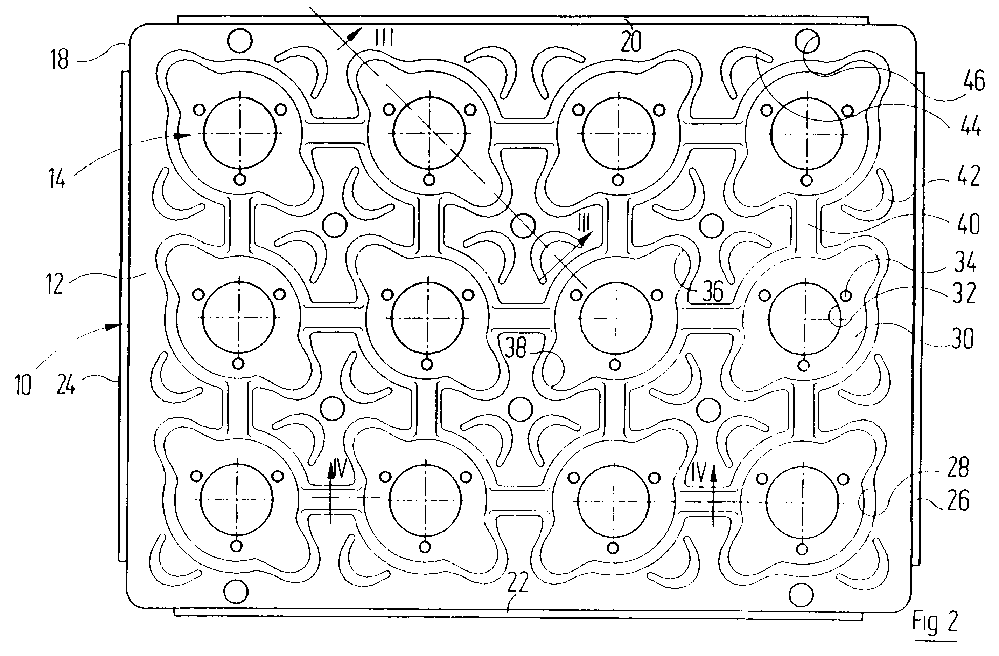

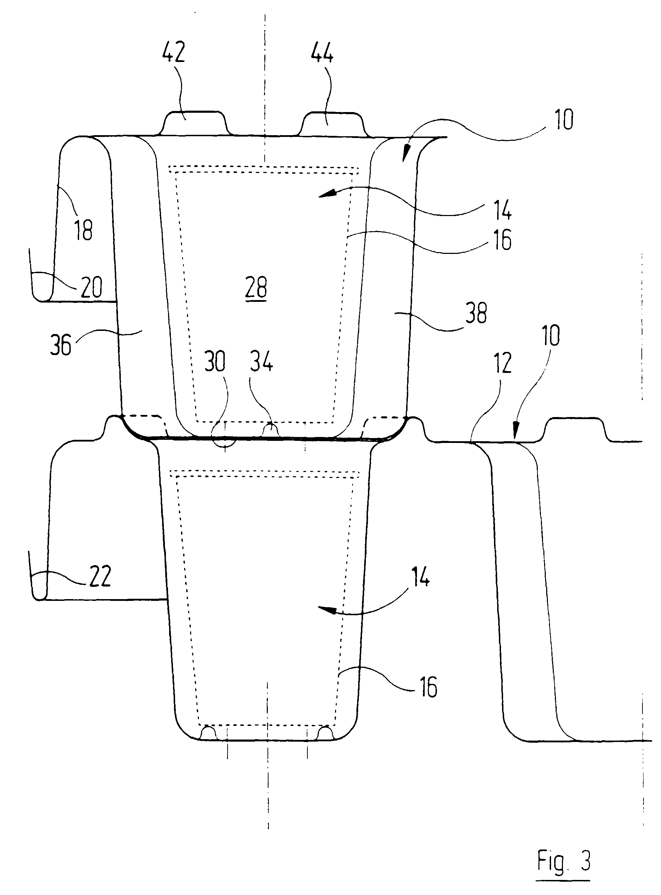

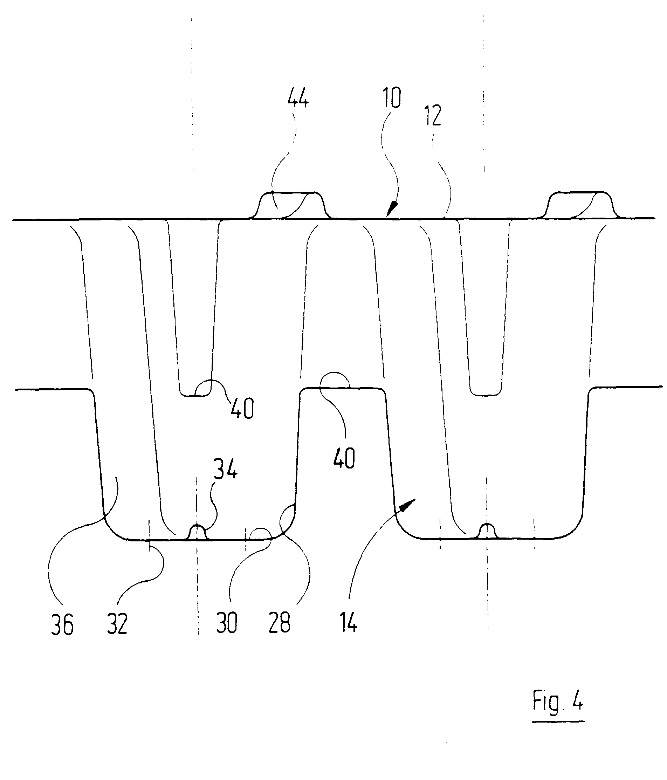

Die einzelnen Becheraufnahmen 14 haben, wie insbesondere aus den Figuren 2 bis 5 ersichtlich, jeweils eine Umfangswand 28, die im wesentlichen kegelförmig ist. An das untere Ende der Umfangswand 28 ist eine ringförmige Bodenwand 30 angeformt, deren freie Kante eine Ablauföffnung 32 vorgibt. Von der ringförmigen Bodenwand 30 sind drei in Winkelrichtung gleich verteilte Noppen 34 nach oben gedrückt. In die Umfangswand 28 sind an der Aufnahmenachse gegenüberliegenden Stellen jeweils zwei Greifrinnen 36, 38 eingearbeitet, deren Wände ebenfalls wieder schräg zur Normalen der Trägerplatte 12 angestellt sind. Benachbarte der Becheraufnahmen 14 sind in der Trägerplatte 12 jeweils durch tiefe Sicken 40 verbunden und zwar sowohl in Längsrichtung als auch in Querrichtung der Trägerplatte 12. Auf diese Weise bilden die Becheraufnahmen 14 und die Sicken 40 ein auch bei nur geringer Wandstärke des Trägers 10 gut belastbares mechanisches Fachwerk.

Radial außerhalb der von den Greifrinnen 36, 38 freien Abschnitt der Umfangswand 28 sind bei jeder Becheraufnahme 14 jeweils zwei Positionierrippen 42, 44 vorgesehen, deren Innenkontur der Außenkontur des unteren Endes der Greifrinnen 36, 38 entspricht. Auf diese Weise sind die unteren Enden der Greifrinnen 36, 38 und die ihnen zugeordneten Abschnitte der Bodenwand 30 eines Trägers durch die Positionierrippen 42, 44 eines darunterliegenden Trägers in der Trägerplattenebene positioniert, wenn man in einem Stapel übereinanderliegende Träger jeweils um 180° um die Hochachse gegeneinander gedreht übereinanderstapelt.

Um dies zu gewährleisten, sind sowohl die Greifrinnen 36, 38 als auch die Positionierrippen 42, 44 zur Quermittelebene des Trägers 10 symmetrisch angeordnet. Stapelt man dagegen Träger mit identischer Ausrichtung übereinander, so schieben sich die Becheraufnahmen 14 eines Trägers inklusive ihrer Greifrinnen 36, 38 in die Becheraufnahmen 14 und die Greifrinnen 36, 38 des darunterliegenden Trägers.

Die zwischen den oberen Enden der Becheraufnahmen 14 liegenden Abschnitte der Trägerplatte 12 sind mit Ablauföffnungen 46 versehen, durch welche Reinigungsflüssigkeit ablaufen kann.

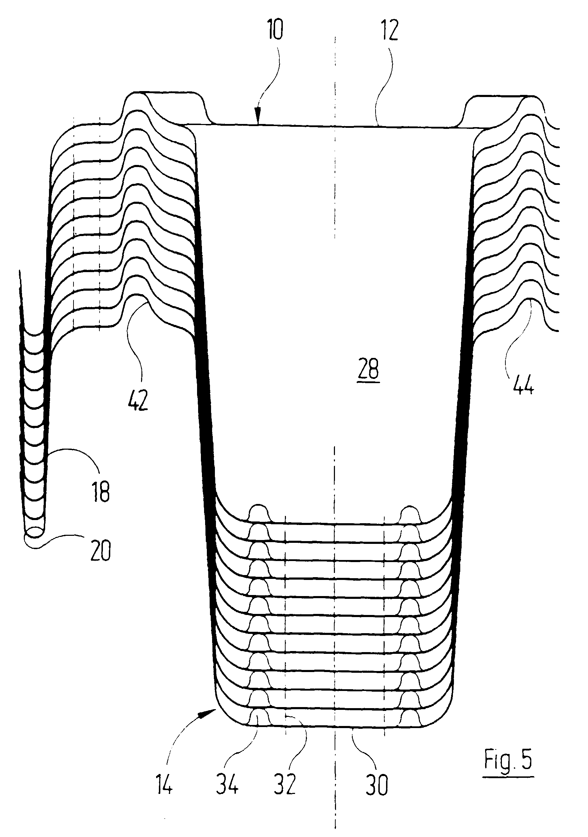

Wie aus Figur 5 ersichtlich, sind die verschiedenen senkrecht zur Trägerplattenebene verlaufenden Wände eines Trägers jeweils schräg angestellt, so daß zum Rücktransport von leeren Trägern diese (in identischer Orientierung, siehe oben) sehr kompakt übereinander gestapelt werden können. Dabei dienen die Noppen 34 dazu die verschiedenen Träger 10 etwas zu beabstanden, so daß sie leicht wieder vereinzelt werden können.

Wie ferner aus Figur 1 ersichtlich, kann man die verhältnismäßig breite Versteifungswand 18 dazu verwenden, Werbe- und/oder Produktinformationen gut sichtbar anzubringen.

Bei dem oben beschriebenen Ausführungsbeispiel war der Träger 10 ein durch Tiefziehen oder Vakuumverformung hergestelltes einstückiges Kunststoffteil. In Abwandlung dieses Ausführungsbeispieles kann man den Träger auch durch Tiefziehen eines entsprechenden Zuschnittes aus Blech oder beschichteter Pappe herstellen. Das verwendede Blech kann entweder aus nichtrostendem Stahl bestehen oder lackiertes oder kunststoffbeschichtetes Blech sein. Wird als Material für den Träger 10 beschichtete Pappe verwendet, so ist die Beschichtung im Hinblick auf die Hygienevorschriften und Widerstandsfähigkeit gegen Reinigung ausgewählt. Entsprechende Zuschnitte können z. B. eine Pappe-Kernschicht umfassen, welche beidseitig mit einer geeigneten dünnen Kunststoffolie kaschiert ist.

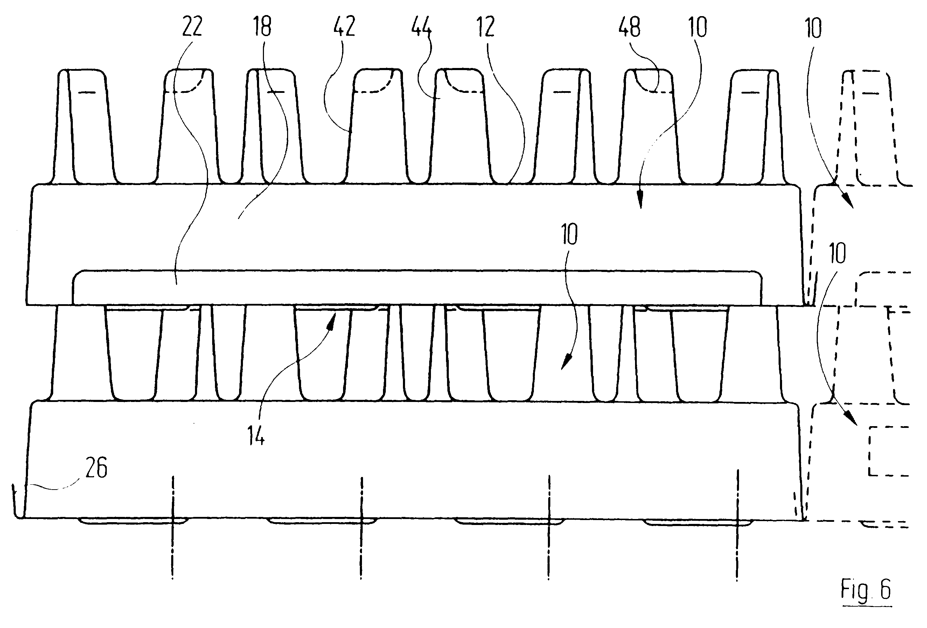

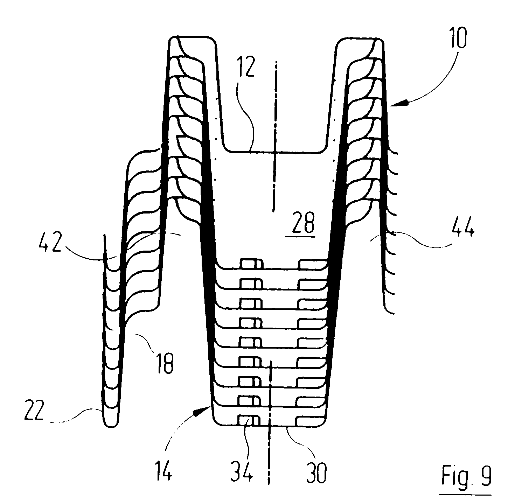

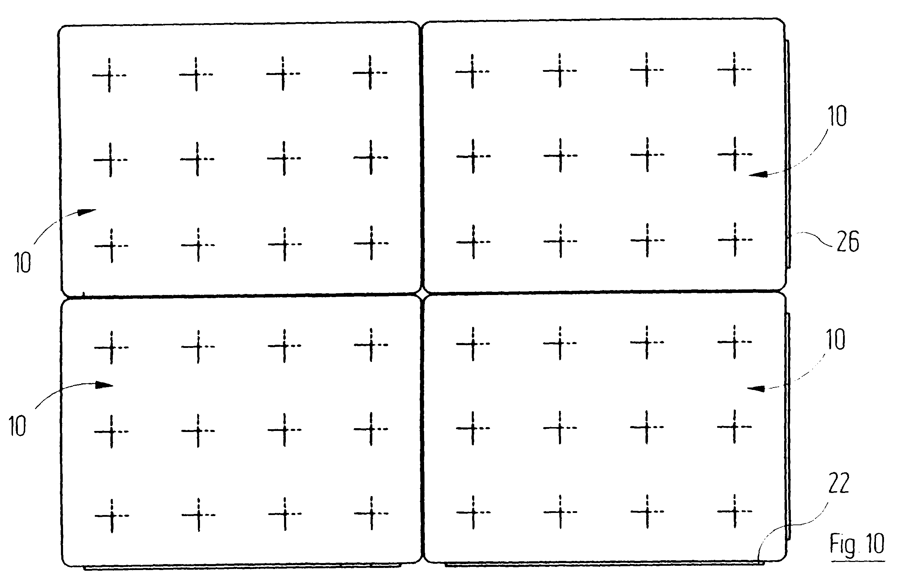

Der in den Figuren 6 bis 10 gezeigte Träger 10 ist mit wenigen nachstehend beschriebenen Abänderungen gleich zum oben unter Bezugnahme auf die Figuren 1 bis 5 beschriebenen. Entsprechende Trägerteile tragen wieder die gleichen Bezugszeichen und werden nicht nochmals im einzelnen beschrieben.

Bei dem abgwandelten Träger haben die Positionierrippen 42 und 44 ein Hohe, die etwa 50% der Gesamthöhe des Trägers 10 entspricht, der zur Aufnahme von Bechern 16 bestimmt ist, die gleiche Abmessungen haben wie beim Beispiel nach den Figuren 1 bis 5. Damit sind große Bereiche der in der Praxis ansprechend und informativ bedruckten Umfangswand der in den Becheraufnahmen stehenden Becher 16 von der Seite eines Trägerstapels her sichtbar. Zum Entnehmen der Becher kann man auch einfach zwischen den Postionierrippen hindurchgreifen.

Die Positionierripen 42, 44 haben bei ihren Enden jeweils aus der Trägerplatte mit hochgezogene Wandabschnitte 48 welche die Böden der Becheraufnahmen 14 des darüberliegenden Trägers 10 abstützen.

Die in den Figuren 6 bis 10 gezeigte Trägerausbildung hat fertigungstechnisch den Vorteil, daß beim Tiefziehen Materialmengen weniger weit fließen müssen, da ausgehend von einem ebenen Rohling der halbe Trägerabstand durch Tiefziehen der Becheraufnahmen 14 in der einen Richtung, die andere Hälfte des Trägerabstandes durch Tiefziehen der Positionierrippen 42, 44 in der anderen Richtung erzeugt wird.

Bei den Träger 10 nach den Figuren 6 bis 10 sind auch die Falzabschnitte 20 und 24 weggelassen; die Rinnenabschnitte 22 und 26 arbeiten direkt mit dem unteren Rand der umlaufenden Versteifungswand 18 zusammen.

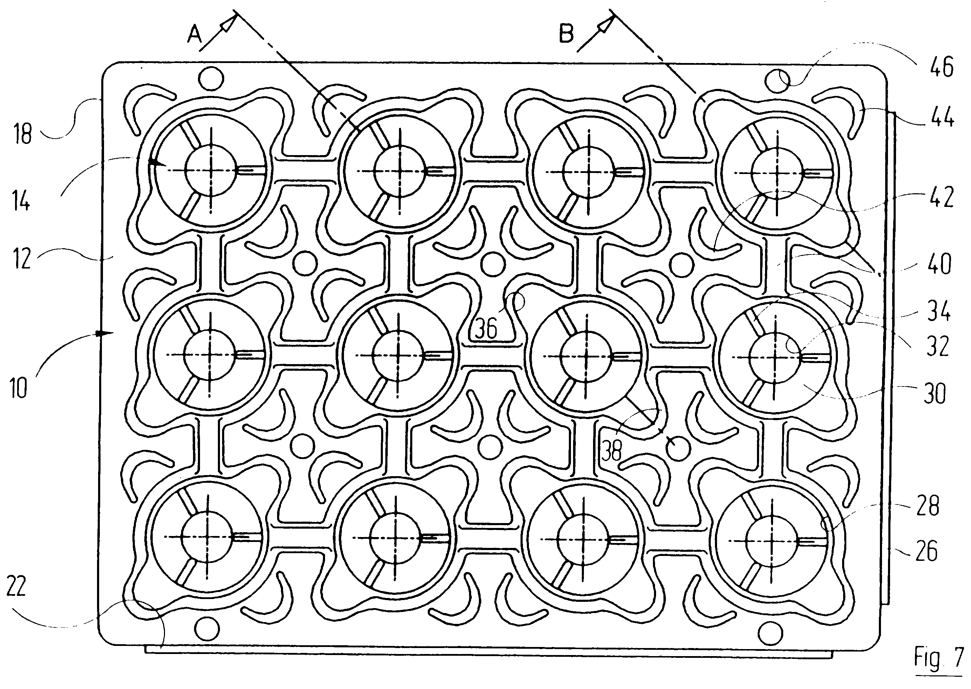

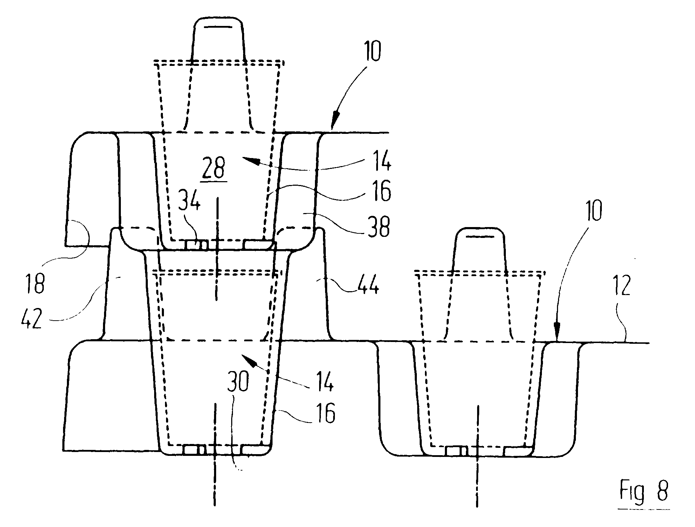

Die Schnittlinien A und B von Figur 7 deuten an, in welcher Richtung die in Figur 8 links unten liegende Becheraufnahme 14 des unteren Trägers 10 bzw. die in Figur 8 oben liegende Becheraufnahme 14 des oberen Trägers 10 geschnitten sind.

## Patentansprüche

1. Träger für Joghurtbecher und dergleichen mit einer Trägerplatte (12,) die eine Vielzahl von Becheraufnahmen (14) für jeweils einen Becher aufweist, die jeweils einen mit dem Boden eines eingesetzten Bechers (16) zusammenarbeitenden Bodenabschnitt (30) und jeweils eine im wesentlichen senkrecht zur Trägerplattenebene verlaufende, die Umfangswand des zugeordneten Bechers (16) umgebende, zur Längsachse der Becheraufnahme (14) geneigte Umfangswand (28) aufweisen, deren unteres Ende jeweils mit einer Bodenwand (30) verbunden ist, dadurch gekennzeichnet, daß in der Nachbarschaft jeder Becheraufnahme (14) auf der Trägerplatte (12) Positioniermittel (42, 44) auf der Trägerplatte (12) vorgesehen sind, zwischen welchen die Bodenwand (30) einer Becheraufnahme (14) eines darübergestellten Trägers (10) Aufnahme finden kann.

2. Träger nach Anspruch 1, dadurch gekennzeichnet, daß die Umfangswand (28) mit mindestens zwei einander bezüglich der Achse einer Becheraufnahme (14) gegenüberliegenden Greifrinnen (36, 38) versehen ist.

3. Träger nach Anspruch 1 oder 2, dadurch gekennzeichnet, daß die Bodenwand (30) eine Ablauföffnung (32) aufweist.

4. Träger nach Anspruch 3, dadurch gekennzeichnet, daß die Bodenwand (30) ringförmig ist.

5. Träger nach Anspruch 3 oder 4, dadurch gekennzeichnet, daß die Bodenwände (30) zu ihren Ablauföffnungen (32) hin abfallen.

6. Träger nach einem der Ansprüche 1 bis 5, dadurch gekennzeichnet, daß die Bodenwände (30) jeweils nach oben vorspringende Noppen (34) tragen.

7. Träger nach einem der Ansprüche 1 bis 6, dadurch gekennzeichnet, daß die Positioniermittel von der Trägerplatte (12) nach oben vorspringende Positionierrippen (42, 44) sind.

8. Träger nach Anspruch 7 in Verbindung mit Anspruch 2, dadurch gekennzeichnet, daß die Trägerplatte (12) rechteckig ist und die Positionierrippen (42, 44) symmetrisch zur Quermittelebene der Tägerplatte (12) bei den einzelnen Becheraufnahmen (14) so angeordnet sind und so in ihren Abmessungen gewählt sind, daß sie auf Umschlag des Trägers (10) in die Greifrinnen (36, 38) eines benachbarten Trägers (10) eintauchen bzw. den unteren Abschnitt einer darüberliegenden Becheraufnahme zwischen sich aufnehmen.

9. Träger nach einem der Ansprüche 1 bis 8, dadurch gekennzeichnet, daß die zwischen den Becheraufnahmen (14) liegenden Bereiche der Trägerplatte (12) mit Ablauföffnungen (46) versehen sind.

10. Träger nach Anspruch 9, dadurch gekennzeichnet, daß die zwischen den Becheraufnahmen (14) liegenden Bereiche der Trägerplatte (12) zu den in ihnen vorgesehenen Ablauföffnungen (46) hin abfallen.

11. Träger nach einem der Ansprüche 1 bis 10, gekennzeichnet durch zwischen den Becheraufnahmen (14) verlaufende Versteifungsrippen oder Versteifungssicken (40).

12. Träger nach einem der Ansprüche 1 bis 11, dadurch gekennzeichnet, daß die Trägerplatte (10) rechteckig ist und jeweils an einer von zwei einander gegenüberliegenden Rechteckseiten mit einem Falzabschnitt (20; 24) und in der dieser gegenüberliegenden Rechtecksseite mit einem Rinnenabschnitt (22; 26) versehen ist, wobei die Falzabschnitte (20; 24) und die Rinnenabschnitte (22; 26) miteinander verhakbar sind.

13. Träger nach einem der Ansprüche 1 bis 12, dadurch gekennzeichnet, daß an den Rand der Trägerplatte (12) eine nach unten hängende in Umfangsrichtung verlaufende Versteifungswand (18) angeformt ist, welche zur Normalen der Trägerplatte (12) geneigt ist und sich vorzugsweise über etwa die halbe axiale Abmessung der Becheraufnahmen (14) erstreckt.

14. Träger nach einem der Ansprüche 1 bis 13, dadurch gekennzeichnet, daß er ein einstückiges Formteil ist, welches aus Kunststoff, Blech oder beschichteter Pappe besteht.

15. Träger nach Anspruch 14, dadurch gekennzeichnet, daß er durch Tiefziehen oder Vakuumverformung eines Zuschnittes hergestellt ist.

16. Träger nach einem der Ansprüche 1 bis 15, dadurch gekennzeichnet, daß die Postioniermittel (42, 44) als über die Trägerplatte (12) überstehende Stützen ausgebildet sind, welche die Böden darüberliegender Becheraufnahmen eines darüberliegenden Trägers (10) tragen können.

17. Träger nach Anspruch 16, dadurch gekennzeichnet, daß die Höhe der Postioniermittel (42, 44) etwa 25 bis 75 Prozent, vorzugsweise etwa 50 Prozent der Trägergesamthöhe beträgt.

## Claims

1. A holder for yogurt pots and the like having a holder tray (12) comprising a plurality of pot receptacles (14) each for one pot, which each comprise a base portion (30) cooperating with the base of a pot (16) inserted therein and a peripheral wall (28) extending substantially perpendicularly to the holder tray plane, surrounding the peripheral wall of the associated pot (16) and inclined with respect to the longitudinal axis of the pot receptacle (14), the lower end of which peripheral wall (28) is connected with a base wall (30), characterised in that positioning means (42, 44) are provided on the holder tray (12) in the vicinity of each pot receptacle (14) on the holder tray (12), between which positioning means (42, 44) the base wall (30) of a pot receptacle (14) of a holder (10) positioned thereabove may be accommodated.

2. A holder according to claim 1, characterised in that the peripheral wall (28) is provided with at least two gripping grooves (36, 38) lying opposite each other with respect to the axis of a pot receptacle (14).

3. A holder according to claim 1 or claim 2, characterised in that the base wall (30) comprises a drainage opening (32).

4. A holder according to claim 3, characterised in that the base wall (30) is annular.

5. A holder according to claim 3 or claim 4, characterised in that the base walls (30) fall away towards their drainage openings (32).

6. A holder according to any one of claims 1 to 5, characterised in that the base walls (30) each carry upwardly projecting nubs (34).

7. A holder according to any one of claims 1 to 6, characterised in that the positioning means consist of positioning ribs (42, 44) projecting upwards from the holder tray (12).

8. A holder according to claim 7, in conjunction with claim 2, characterised in that the holder tray (12) is rectangular and the positioning ribs (42, 44) are so arranged symmetrically with respect to the transverse central plane of the holder tray (12) in the case of the individual pot receptacles (14) and their dimensions are so selected that, when the holder (10) is turned round, they penetrate into the gripping grooves (36, 38) of an adjacent holder (10) or accommodate between them the lower portion of a pot receptacle lying thereabove.

9. A holder according to any one of claims 1 to 8, characterised in that the areas of the holder tray (12) located between the pot receptacles (14) are provided with drainage openings (46).

10. A holder according to claim 9, characterised in that the areas of the holder tray (12) lying between the pot receptacles (14) fall away towards the drainage openings (46) provided therein.

11. A holder according to any one of claims 1 to 10, characterised by reinforcing ribs or reinforcing flanges (40) extending between the pot receptacles (14).

12. A holder according to any one of claims 1 to 11, characterised in that the holder tray (10) is rectangular and is respectively provided with a folded portion (20; 24) on one of two opposing sides of the rectangle and with a groove portion (22; 26) on the side of the rectangle lying opposite thereto, wherein the folded portions (20; 24) and the groove portions (22; 26) may be hooked together.

13. A holder according to any one of claims 1 to 12, characterised in that a reinforcing wall (18) hanging downwards and extending in the circumferential direction (18) is formed at the edge of the holder tray (12), which reinforcing wall (18) is inclined with respect to the normal line of the holder tray (12) and preferably extends over approximately half the axial dimension of the pot receptacles (14).

14. A holder according to any one of claims 1 to 13, characterised in that it comprises a one-piece shaped article consisting of plastics material, sheet metal or coated paperboard.

15. A holder according to claim 14, characterised in that it is produced by thermoforming, deep-drawing or the like or vacuum forming of a blank.

16. A holder according to any one of claims 1 to 15, characterised in that the positioning means (42, 44) take the form of supports projecting above the holder tray (12), which supports may carry the bases of above-lying pot receptacles of a holder (10) lying thereabove.

17. A holder according to claim 16, characterised in that the height of the positioning means (42, 44) amounts to approximately 25 to 75 percent, preferably approximately 50 percent, of the overall holder height.

## Revendications

1. Support pour pots de yaourt et similaires, comprenant un plateau support (12) qui présente une pluralité de logements de pots (14), servant chacun à la réception d'un pot, qui comportent chacun une partie de fond (30) coopérant avec le fond d'un pot (16) placé dans le logement et une paroi périphérique (28) qui est essentiellement perpendiculaire au plan du plateau support, entoure la paroi périphérique du pot (16) coordonné et est inclinée par rapport à l'axe longitudinal du logement de pot 14, paroi périphérique (28) dont l'extrémité inférieure est reliée à une paroi de fond (30), caractérisé en ce que des moyens de positionnement (42, 44) sont prévus sur le plateau support (12) à proximité de chaque logement de pot (14) de ce plateau, moyens entre lesquels peut être reçue la paroi de fond (30) d'un logement de pot (14) d'un support (10) placé au-dessus.

2. Support selon la revendication 1, caractérisé en ce que la paroi périphérique (28) est pourvue d'au moins deux gouttières de préhension (36, 38) situées l'une en face de l'autre par rapport à l'axe du logement de pot (14).

3. Support selon la revendication 1 ou 2, caractérisé en ce que la paroi de fond (30) présente une ouverture d'écoulement (32).

4. Support selon la revendication 3, caractérisé en ce que la paroi de fond (30) est annulaire.

5. Support selon la revendication 3 ou 4, caractérisé en ce que les parois de fond (30) sont inclinées vers le bas en direction de leurs ouvertures d'écoulement (32).

6. Support selon une des revendications 1 à 5, caractérisé en ce que les parois de fond (30) portent chacun des boutons (34) faisant saillie vers le haut.

7. Support selon une des revendications 1 à 6, caractérisé en ce que les moyens de positionnement sont des nervures de positionnement (42, 44) faisant saillie vers le haut à partir du plateau support (12).

8. Support selon la revendication 7 en combinaison avec la revendication 2, caractérisé en ce que le plateau support (12) est rectangulaire et les nervures de positionnement (42, 44) sont disposées, symétriquement par rapport au plan médian transversal du plateau support (12), près des différents logements de pots (14), et leurs dimensions sont choisies de manière que, suivant la position en rotation du support (10), ces nervures pénètrent dans les gouttières de préhension (36, 38) d'un support (10) voisin ou reçoivent entre elles la partie inférieure d'un logement de pot situé au-dessus d'elles.

9. Support selon une des revendications 1 à 8, caractérisé en ce que les parties du plateau support (12) situées entre les logements de pots (14) sont pourvues d'ouvertures d'écoulement (46).

10. Support selon la revendication 9, caractérisé en ce que les parties du plateau support (12) situées entre les logements de pots (14) sont inclinées vers le bas en direction des ouvertures d'écoulement (46) prévues en elles.

11. Support selon une des revendications 1 à 10, caractérisé par des nervures ou des moulures de raidissement (40) s'étendant entre les logements de pots (14).

12. Support selon une des revendications 1 à 11, caractérisé en ce que le plateau support (10) est rectangulaire et pourvu, sur l'un de deux côtés mutuellement opposés du rectangle, d'une portion formant repli (20; 24) et, sur le côté du rectangle situé à l'opposé de lui, d'une portion formant rainure (22; 26), l'agencement étant tel que les portions formant replis (20; 24) et les portions formant rainures (22; 26) de supports voisins peuvent être accrochées ensemble.

13. Support selon une des revendications 1 à 12, caractérisé en ce qu'une paroi raidisseuse (18) s'étendant dans la direction périphérique est formée sur le bord du plateau support (12), de manière à être suspendue à ce bord, paroi raidisseuse qui est inclinée par rapport à la normale au plateau support (12) et s'étend de préférence sur à peu près la moitié de la dimension axiale des logements de pots (14).

14. Support selon une des revendications 1 à 13, caractérisé en ce qu'il est constitué par une pièce façonnée d'un seul tenant qui est faite de matière plastique, tôle ou carton enduit.

15. Support selon la revendication 14, caractérisé en ce qu'il est fabriqué par emboutissage ou formage sous vide d'une découpe.

16. Support selon une des revendications 1 à 15, caractérisé en ce que les moyens de positionnement (42, 44) sont réalisés comme des appuis qui dépassent en haut du plateau support (12) et sont capables de porter les fonds de logements de pots situés au-dessus d'eux d'un support (10) placé au-dessus desdits moyens.

17. Support selon la revendication 16, caractérisé en ce que la hauteur des moyens de positionnement (42, 44) correspond à peu près à 25 jusqu'à 75 pour-cent, de préférence à environ 50 pour-cent de la hauteur totale du support.
